(19) Europäisches Patentamt
European Patent Office
Office européen des brevets

(11) Veröffentlichungsnummer : **0 007 046**
**B1**

(12) # EUROPÄISCHE PATENTSCHRIFT

(45) Veröffentlichungstag der Patentschrift : **21.10.81**

(51) Int. Cl.³ : **C 08 F 26/02**

(21) Anmeldenummer : **79102188.4**

(22) Anmeldetag : **29.06.79**

(54) **Verfahren zur Herstellung von N-Vinylamid-Polymeren und danach erhaltene Produkte.**

(30) Priorität : **06.07.78 DE 2829652**

(43) Veröffentlichungstag der Anmeldung : **23.01.80 (Patentblatt 80/02)**

(45) Bekanntmachung des Hinweises auf die Patenterteilung : **21.10.81 Patentblatt 81/42**

(84) Benannte Vertragsstaaten : **AT BE CH DE FR GB IT NL SE**

(56) Entgegenhaltungen :

**DE - B - 1 246 248**

(73) Patentinhaber : **HOECHST AKTIENGESELLSCHAFT**
**Zentrale Patentabteilung Postfach 80 03 20**
**D-6230 Frankfurt/Main 80 (DE)**

(72) Erfinder : **Eichhorn, Wilfried, Dr.**
**Ziegelheck 1**
**D-6240 Königstein/Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

EP 0 007 046 B1

Verfahren zur Herstellung von N-Vinylamid-Polymeren und danach erhaltene Produkte

Es ist bekannt, daß N-Vinylamid-Polymere durch Polymerisieren von aliphatischen tertiären N-Vinylamiden mit Hilfe von Peroxyverbindungen und/oder Azoverbindungen als Katalysatoren in Gegenwart von aliphatischen Kohlenwasserstoffen hergestellt werden (vgl. deutsche Patenschrift 12 46 248 = US-Patentschrift 36 96 085). Dabei wird beispielsweise auch ein Gemisch aus Azodiisobutyronitril und tert. Butylhydroperoxid als Katalysator eingesetzt. Das bekannte Verfahren hat den Nachteil, daß die danach erhaltenen Homo- oder Copolymere, die in Pulverform anfallen, noch beträchtliche Mengen von Restmonomeren enthalten; diese müssen durch zusätzliche Verfahrensmaßnahmen möglichst weitgehend entfernt werden, da sie sonst zu Umweltbelästigungen führen und bei der weiteren Verwendung der Polymeren stören können. Außerdem verringert ein hoher Restmonomergehalt die Polymerausbeute und beeinträchtigt dadurch die Wirtschaftlichkeit des Verfahrens.

Aufgabe der Erfindung ist die Entwicklung eines verbesserten Verfahrens zur Herstellung von N-Vinylamid-Polymeren, das den Nachteil des bekannten Verfahrens nicht aufweist und die Synthese von N-Vinylamid-Polymeren mit geringem Restmonomergehalt ermöglicht. Das Verfahren der Erfindung vermeidet die Nachteile des bekannten Verfahrens im wesentlichen dadurch, daß verschiedene Initiatoren nacheinander eingesetzt werden.

Die Erfindung betrifft ein Verfahren zur Herstellung von N-Vinylamid-Polymeren durch Polymerisieren eines tertiären N-Vinylamidcarbonsäureamids der Formel I

$$CH_2 = CH - \underset{\displaystyle R^2}{\underset{|}{N}} - CO - R^1 \qquad (I)$$

in der $R^1$ ein Wasserstoffatom oder ein Kohlenwasserstoffrest mit 1 bis 20 Kohlenstoffatomen ist und $R^2$ einen Alkylrest mit 1 bis 20 Kohlenstoffatomen darstellt, der mit einer vollständig alkylierten Aminogruppe substituiert sein kann, gegebenenfalls zusammen mit einer copolymerisationsfähigen olefinisch ungesättigten Verbindung, in Gegenwart eines inerten aliphatischen Kohlenwasserstoffs mit 3 bis 20 Kohlenstoffatomen bei einer Temperatur von 0 bis 150 °C und in Anwesenheit von Azoverbindungen und/oder Peroxyverbindungen als radikalisch wirksame Initiatoren, dadurch gekennzeichnet, daß die Polymerisation in Gegenwart (a) von 0,1 bis 4 Gewichtsprozent (bezogen auf die Gesamtmonomermenge) eines Initiators, der unter Normalbedingungen im monomeren N-Vinylcarbonsäureamid löslich und im verwendeten Kohlenwasserstoff unlöslich ist, und (b) von 0,02 bis 2 Gewichtsprozent (bezogen auf die Gesamtmonomermenge) eines Initiators, der unter Normalbedingungen im verwendeten Kohlenwasserstoff löslich ist, durchgeführt wird, wobei das Gewichtsverhältnis von Kohlenwasserstoff zu Monomer 20 : 1 bis 0,5 : 1 beträgt.

Die Erfindung betrifft ferner die nach dem vorgenannten Verfahren hergestellten N-Vinylcarbonsäureamid-Polymeren.

Unter tertiären N-Vinylcarbonsäureamiden werden vorzugsweise solche Verbindungen der Formel (1) verstanden,

$$CH_2 = CH - \underset{\displaystyle R^2}{\underset{|}{N}} - CO - R^1 \qquad (I)$$

in der $R^1$ ein Wasserstoffatom oder ein Kohlenwasserstoffrest mit 1 bis 8 Kohlenstoffatomen ist und $R^2$ einen Alkylrest mit 1 bis 8 Kohlenstoffatomen bedeutet, der mit einer vollständig alkylierten Aminogruppe, deren Alkylreste jeweils 1 bis 4 Kohlenstoffatome aufweisen, substituiert sein kann. Der vorgenannte Kohlenwasserstoffrest kann ein aliphatischer, cycloaliphatischer oder aromatischer Rest sein; bevorzugt ist ein Alkylrest mit 1 bis 6 Kohlenstoffatomen. Erfindungsgemäß verwendete N-Vinylcarbonsäureamide sind beispielsweise N-Vinyl-N-alkyl-formamide, N-Vinyl-N-alkyl-acetamide, N-Vinyl-N-alkyl-propionamide, N-Vinyl-N-alkyl-butyramide und N-Vinyl-N-alkyl-isobutyramide, wobei der Alkylrest vorzugsweise jeweils ein Methyl-, Ethyl-, Propyl-, Isopropyl- oder tert.-Butylrest ist.

Die Herstellung der N-Vinylcarbonsäureamide erfolgt nach bekannten Verfahren, z.B. durch Umsetzung von N-substituierten Carbonsäureamiden mit Acetylen in flüssiger Phase bei einer Temperatur von 90 bis 300 °C mit Hilfe von basischen Katalysatoren, z.B. Alkalimetallen und Alkalimetallverbindungen der vorgenannten Amide (vgl. deutsche Auslegeschrift 11 76 124 = US-Patentschrift 33 24 177).

Das erfindungsgemäße Verfahren ist auch zur Herstellung von N-Vinylcarbonsäureamid-Copolymeren geeignet. Als Comonomere eignen sich vor allem olefinisch ungesättigte Verbindungen der Formel (II),

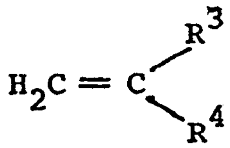 (II)

in der $R^3$ ein Wasserstoffatom oder eine Methylgruppe ist und $R^4$ ein Wasserstoffatom, einen Alkylrest mit 1 bis 4 Kohlenstoffatomen, einen Alkoxyrest mit 1 bis 4 Kohlenstoffatomen, einen Alkylcarboxyrest mit 2 bis 18, vorzugsweise 2 bis 10 Kohlenstoffatomen, eine Nitrilgruppe, einen Aminocarbonylrest, ein Halogenatom, vorzugsweise ein Chloratom, oder einen Alkoxycarbonylrest mit 2 bis 12, vorzugsweise 2 bis 9 Kohlenstoffatomen bedeutet.

Geeignete Comonomere sind insbesondere (a) Olefine, z.B. Ethylen, Propylen und Isobutylen, (b) Vinylether, z.B. Vinylmethylether, Vinylethylether und Vinyl-n-butylether, (c) Vinylester von aliphatischen Monocarbonsäuren, Z.B. Vinylacetat, Vinylpropionat, Vinylbutyrat, Vinyllaurat und Vinyldecanate, (d) Acrylnitril und Methacrylnitril, (e) Acrylamid und Methacrylamid, (f) Vinylhalogenide, z.B. Vinylchlorid, (g) Acrylsäureester von einwertigen Alkanolen, z.B. Methylacrylat, Ethylacrylat, Butylacrylat und 2-Ethylhexylacrylat, sowie (h) Methacrylsäureester von einwertigen Alkanolen, z.B. Methylmethacrylat, Ethylmethacrylat, Butylmethacrylat, Hexylmethacrylat, Octylmethacrylat und 2-Ethylhexylmethacrylat. Ebenfalls geeignet sind Maleinsäurediester und Fumarsäurediester, insbesondere von einwertigen Alkanolen mit 2 bis 10, vorzugsweise 3 bis 8 Kohlenstoffatomen, z.B. Dibutylmaleinat, Dihexylmaleinat, Dioctylmaleinat, Dibutylfumarat, Dihexylfumarat und Dioctylfumarat.

Der erfindungsgemäß verwendete inerte aliphatische Kohlenwasserstoff ist üblicherweise ein lineares oder verzweigtes Alkan mit 3 bis 20, vorzugsweise 4 bis 10 Kohlenstoffatomen, z.B. ein Propan, Butan, Pentan, Hexan, Heptan, Octan, Nonan oder Decan. Das Gewichtsverhältnis von Kohlenwasserstoff zu Monomer beträgt 20: 1 bis 0,5: 1, vorzugsweise 10: 1 bis 1: 1.

Wesentliches Merkmal der Erfindung ist die Verwendung von zwei Initiatoren, von denen (a) einer unter Normalbedingungen im monomeren N-Vinylcarbonsäureamid löslich und im jeweils verwendeten Kohlenwasserstoff (KW) unlöslich ist, (b) der andere dagegen unter Normalbedingungen im verwendeten Kohlenwasserstoff löslich sein muß. Dabei ist es grundsätzlich ohne Bedeutung, zu welcher chemischen Verbindungsklasse der KW-unlösliche und der KW-lösliche Initiator gehört.

Als monomerlöslicher und KW-unlöslicher Initiator wird üblicherweise eine aliphatische Azoverbindung oder eine organische Peroxyverbindung verwendet. Beispiele hierfür sind insbesondere Azodiisobuttersäurenitril, Azo-μ,μ'-bis(4-cyanvaleriansäure) und Azodicarbonamid.

Die Menge des KW-unlöslichen Initiators beträgt 0,1 bis 4, vorzugsweise 0,2 bis 2 Gewichtsprozent (bezogen auf die Gesamtmonomermenge).

Als KW-löslicher Initiator dient insbesondere eine organische Peroxyverbindung, vorzugsweise ein Ester einer Peroxysäure. Besonders geeignet sind Ester eines verzweigten Alkanols, das 3 bis 8, vorzugsweise 3 oder 4 Kohlenstoffatome aufweist, mit Perkohlensäure oder mit einer einbasigen aliphatischen Percarbonsäure, die 4 bis 12, vorzugsweise 4 bis 8 Kohlenstoffatome aufweist. Beispielsweise sind hier zu nennen Diisopropylperkarbonat, Di-t-butylperkarbonat, Bis(2-ethylhexyl)-perkarbonat, Isopropylperisobutyrat, t-Butylperisobutyrat, Isopropylperpivalat, t-Butylperpivalat, Isopropylperoctoat und t-Butylperoctoat sowie Dilauroylperoxid und Dibenzoylperoxid. Die Menge des KW-löslichen Initiators beträgt 0,02 bis 2,0, vorzugsweise 0,1 bis 1,0 Gewichtsprozent (bezogen auf die Gesamtmonomermenge).

Die erfindungsgemäße Fällungspolymerisation wird üblicherweise bei einer Temperatur von 0 bis 150 °C, vorzugsweise von 40 bis 120 °C durchgeführt. Die Anwendung von Inertgas, z.B. Stickstoff oder Edelgasen wie Argon, ist zweckmäßig.

Die Verwendung eines Reglers ist nicht zwingend erforderlich, aber gegebenenfalls empfehlenswert. Als Reglersubstanzen eignen sich aliphatische Mercaptane, niedere aliphatische Aldehyde und vor allem organische Peroxide, die unter den gegebenen Reaktionsbedingungen nicht als Initiatoren wirksam sind, insbesondere aliphatische Mercaptane mit 4 bis 16 Kohlenstoffatomen, z.B. n-Butylmercaptan, t-Butylmercaptan und n-Docecylmercaptan, ferner aliphatische Aldehyde mit 2 bis 4 Kohlenstoffatomen, z.B. Acetaldehyd, Propionaldehyd und Butyraldehyd, sowie t-Butylhydroperoxid.

Eine bevorzugte Ausführungsform des erfindungsgemäßen Verfahrens besteht darin, daß zunächst die Hauptmenge, vorzugsweise 60 bis 80 Gewichtsprozent, des inerten aliphatischen Kohlenwasserstoffs im Reaktionsgefäß vorgelegt und auf die Polymerisationstemperatur erhitzt wird, dann das N-Vinylcarbonsäureamid — gegebenenfalls zusammen mit einem Comonomer — zusammen mit der Restmenge, vorzugsweise 40 bis 20 Gewichtsprozent, des inerten aliphatischen Kohlenwasserstoffe und dem KW-unlöslichen Initiator sowie gegebenenfalls einem Regler unter ständiger Bewegung des vorgelegten Kohlenwasserstoffs zudosiert wird, danach der KW-lösliche Initiator zugegeben wird und schließlich die Polymerisation durch Nachheizen zu Ende geführt wird.

Nach Beendigung der Polymerisationsreaktion wird das Reaktionsgemisch auf Raumtemperatur abgekühlt, und das ausgefällte Polymer, das als Pulver oder in körniger Form anfällt, wird isoliert und getrocknet. Das Isolieren erfolgt vorzugsweise durch Filtration und das Trocknen bei erhöhter Temperatur, vorzugsweise bei einer Temperatur von 90 bis 120 °C, gegebenenfalls unter Inertgas.

Die durch das erfindungsgemäße Verfahren erhaltenen Polymere eignen sich als Schutzkolloide und Dispergiermittel für Emulsions- oder Suspensionspolymerisationen sowie als Verdickungsmittel und als Textilhilfsmittel.

Die folgenden Beispiele erläutern die Erfindung und zeigen die Vorteile gegenüber dem Stand der Technik, der aus den Vergleichsbeispielen ersichtlich ist. Alle Prozentangaben beziehen sich auf das Gewicht, wenn nicht anders angegeben. Die Restmonomergehalte werden jeweils durch Gaschromatographie bestimmt.

## Beispiel 1

In einem mit Stickstoff gespülten 1-Liter-Rührautoklav mit Heiz- und Kühlmantel werden 390 g n-Hexan vorgelegt und unter Rühren auf eine Temperatur von 90 °C erhitzt. Dann wird im Laufe von 3 h ein Gemisch aus 155 g N-Vinyl-N-methyl-acetamid, 12 g Bis(2-ethylhexyl)-maleinat, 135 g n-Hexan, 0,8 g Azodiisobuttersäurenitril und 0,4 g t-Butyl-hydroperoxid zudosiert. Nach anschließender Zugabe von 1,2 g t-Butylperoctoat, gelöst in 20 g n-Hexan, wird das Reaktionsgemisch zur Nachpolymerisation noch 3 h lang auf einer Temperatur von 90 °C gehalten. Danach wird der Autoklavinhalt auf Raumtemperatur abgekühlt, und das feinkörnige Copolymer wird durch Filtrieren des Gemisches isoliert. Das feuchte Copolymer enthält noch 42 % n-Hexan und 0,8 % monomeres N-Vinyl-N-methyl-acetamid. Nach 30 minütiger Trocknung bei 110 °C enthält das geruchsarme Copolymer noch 1,8 % flüchtige Anteile, im wesentlichen N-Vinyl-N-methyl-acetamid.

## Beispiel 2

Beispiel 1 wird wiederholt, jedoch beträgt die Menge des t-Butyl-peroctoats nur 0,6 g. Das feuchte Copolymer enthält noch 37 % n-Hexan und 1,3 % monomeres N-Vinyl-N-methyl-acetamid. Nach Trocknung enthält das geruchsarme Copolymer noch 2,6 % flüchtige Anteile, im wesentlichen N-Vinyl-N-methyl-acetamid.

## Beispiel 3

Beispiel 1 wird wiederholt, jedoch wird statt t-Butylperoctoat nun Diisopropylperkarbonat verwendet, und die Temperatur während der Nachpolymerisation beträgt statt 90 °C nun 70 °C. Das feuchte Coplymer enthält noch 46 % n-Hexan und 1,0 % monomeres N-Vinyl-N-methyl-acetamid. Nach Trocknung enthält das geruchsarme Copolymer noch 2,3 % flüchtige Anteile, im wesentlichen N-Vinyl-N-methyl-acetamid.

## Beispiel 4

Beispiel 1 wird wiederholt, jedoch wird anstatt t-Butylperoctoat nun t-Butylperpivalat verwendet, und die Temperatur während der Nachpolymerisation beträgt statt 90 °C nun 80 °C. Das feuchte Copolymer enthält noch 38 % n-Hexan und 1,2 % monomeres N-Vinyl-N-methyl-acetamid. Nach Trocknung enthält das geruchsarme Copolymer noch 2,5 % flüchtige Anteile, im wesentlichen N-Vinyl-N-methyl-acetamid.

## Vergleichsbeispiel 1

Beispiel 1 wird wiederholt, jedoch wird statt der Lösung von 1,2 g t-Butylperoctoat in 20 g n-Hexan nun eine Suspension von 1,2 g Azodiisobuttersäurenitril in 20 g n-Hexan verwendet. Das feuchte Copolymer enthält noch 40 % n-Hexan und 3,9 % monomeres N-Vinyl-N-methyl-acetamid. Nach Trocknung enthält das geruchsintensive Copolymer noch 6,3 % flüchtige Anteile, im wesentlichen N-Vinyl-N-methyl-acetamid.

## Vergleichsbeispiel 2

Beispiel 1 wird wiederholt, jedoch wird statt der Lösung von 1,2 g t-Butylperoctoat in 20 g n-Hexan nun eine Lösung von 1,2 g Azodiisobuttersäurenitril in 10 g N-Vinyl-N-methyl-acetamid verwendet. Das feuchte Copolymer enthält noch 36 % n-Hexan und 3,7 % monomeres N-Vinyl-N-methyl-acetamid. Nach Trocknung enthält das geruchsintensive Copolymer noch 6 % flüchtige Anteile, im wesentlichen N-Vinyl-N-methyl-acetamid.

## Beispiel 5

In einem mit Stickstoff gespülten 1-Liter-Autoklav mit Heiz- und Kühlmantel werden 390 g n-Heptan und 6 g 2-Ethylhexylacrylat vorgelegt und unter Rühren auf eine Temperatur von 90 °C erhitzt. Dann wird im Laufe von 3 h ein Gemisch aus 155 g N-Vinyl-N-methyl-acetamid, 135 g n-Heptan und 0,6 g Azodiisobuttersäurenitril zudosiert. Nach anschließender Zugabe von 1,0 g t-Butylperoctoat, gelöst in

20 g n-Heptan, wird das Reaktionsgemisch zur Nachpolymerisation noch 3 h lang auf einer Temperatur von 90 °C gehalten. Danach wird der Autoklavinhalt auf Raumtemperatur gekühlt, und das pulverförmige Copolymer wird durch Filtrieren des Gemisches isoliert. Das feuchte Copolymer enthält noch 49 % n-Heptan und 0,9 % N-Vinyl-N-methyl-acetamid. Nach 30 minütiger Trocknung bei 110 °C enthält das geruchsarme Copolymer noch 1,9 % flüchtige Anteile, im wesentlichen N-Vinyl-N-methyl-acetamid.

Beispiel 6

Beispiel 5 wird wiederholt, jedoch ohne 2-Ethylhexyl-acrylat, statt t-Butylperoctoat wird nun t-Butylperpivalat verwendet, und die Temperatur während der Nachpolymerisation beträgt statt 90 °C nun 80 °C. Das feuchte N-Vinyl-N-methyl-acetamid-Homopolymer enthält noch 43 % n-Heptan und 1,4 % Restmonomer. Nach Trocknung enthält das geruchsarme Polymer noch 2,8 % flüchtige Anteile, im wesentlichen Restmonomer.

Vergleichsbeispiel 3

Beispiel 5 wird wiederholt, jedoch ohne Zugabe der t-Butylperoctoat-Lösung. Das feuchte Copolymer enthält noch 44 % n-Heptan und 3,0 % monomeres N-Vinyl-N-methyl-acetamid. Nach Trocknung enthält das geruchsintensive Copolymer noch 6,1 % flüchtige Anteile, im wesentlichen N-Vinyl-N-methyl-acetamid.

Vergleichsbeispiel 4

Beispiel 5 wird wiederholt, jedoch werden statt der t-Butylperoctoat-Lösung nun 4,0 g einer 30 prozentigen wäßrigen Lösung des Natriumsalzes der 4,4-Azo-bis(4-cyanovaleriansäure) verwendet. Das feuchte Copolymer enthält noch 41 % n-Heptan, 1,6 % Wasser und 2,9 % N-Vinyl-N-methyl-acetamid. Nach Trocknung enthält das geruchsintensive Copolymer noch 6,6 % flüchtige Anteile, im wesentlichen N-Vinyl-N-methyl-acetamid.

Die Ergebnisse der vorstehenden erfindungsgemäßen Beispiele und Vergleichsbeispiele sind in der folgenden Tabelle zusammengefaßt.

| Beispiel | KW-löslicher Initiator | VIMA*-Gehalt im feuchten Polymer (%) | flüchtige Anteille im trockenen Polymer (%) |
|---|---|---|---|
| 1 | t-Butylperoctoat | 0,8 | 1,8 |
| 2 | t-Butylperoctoat | 1,3 | 2,6 |
| 3 | Diisopropylpercarbonat | 1,0 | 2,3 |
| 4 | t-Butylperpivalat | 1,2 | 2,5 |
| Vergleich 1 | — | 3,9 | 6,3 |
| Vergleich 2 | — | 3,7 | 6 |
| 5 | t-Butylperoctoat | 0,9 | 1,9 |
| 6 | t-Butylperpivalat | 1,4 | 2,8 |
| Vergleich 3 | — | 3,0 | 6,1 |
| Vergleich 4 | — | 2,9 | 6,6 |

*VIMA = N-Vinyl-N-methyl-acetamid

**Ansprüche**

1. Verfahren zur Herstellung von N-Vinylamid-Polymeren durch Polymerisieren eines tertiären N-Vinylcarbonsäureamids der Formel (I)

$$CH_2 = CH - \underset{\displaystyle R^2}{\underset{|}{N}} - CO - R^1 \qquad (I)$$

in der $R^1$ ein Wasserstoffatom oder ein Kohlenwasserstoffrest mit 1 bis 20 kohlenstoffatomen ist und $R^2$ einen Alkylrest mit 1 bis 20 Kohlenstoffatomen darstellt, der mit einer vollständig alkylierten Aminogruppe substituiert sein kann, gegebenenfalls zusammen mit einer copolymerisationsfähigen olefinisch ungesättigten Verbindung, in Gegenwart eines inerten aliphatischen Kohlenwasserstoffs mit 3 bis 20 Kohlenstoffatomen bei einer Temperatur von 0 bis 150 °C und in Anwesenheit von Azoverbindungen und/oder Peroxyverbindungen als radikalisch wirksame Initiatoren, dadurch gekennzeichnet, daß die Polymerisation in Gegenwart (a) von 0,1 bis 4 Gewichtsprozent (bezogen auf die Gesamtmonomermenge) eines Initiators, der unter Normalbedingungen im monomeren N-Vinylcarbonsäureamid löslich und im verwendeten Kohlenwasserstoff unlöslich ist, und (b) von 0,02 bis 2 Gewichtsprozent (bezogen auf die Gesamtmonomermenge) eines Initiators, der unter Normalbedingungen im verwendeten Kohlenwasserstoff löslich ist, durchgeführt wird, wobei das Gewichtsverhältnis von Kohlenwasserstoff zu Monomer 20 : 1 bis 0,5: 1 beträgt.

2. Verfahren nach Anspruch 1, dadurch gekennzeichnet, daß als Initiator b) ein Ester einer Peroxysäure verwendet wird.

3. Verfahren nach Anspruch 2, dadurch gekennzeichnet, daß als Ester einer Peroxysäure ein Ester eines verzweigten Alkanols, das 3 bis 8 Kohlenstoffatome aufweist, mit Perkohlensäure oder mit einer einbasigen aliphatischen Percarbonsäure, die 4 bis 12 Kohlenstoffatome aufweist, verwendet wird.

4. Verfahren nach Anspruch 1, dadurch gekennzeichnet, daß zunächst die Hauptmenge des Kohlenwasserstoffs im Reaktionsgefäß vorgelegt und auf die Polymerisationstemperatur gebracht wird, dann das N-Vinylcarbonsäureamid, gegebenenfalls zusammen mit dem Comonomer, zusammen mit der Restmenge des Kohlenwasserstoffs und dem darin unlöslichen Initiator sowie gegebenenfalls mit einem Regler unter ständiger Bewegung des vorgelegten Kohlenwasserstoffs zudosiert und danach der im Kohlenwasserstoff lösliche Initiator zugegeben wird.

5. Verfahren nach Anspruch 4, dadurch gekennzeichnet, daß als Hauptmenge des Kohlenwasserstoffs 60 bis 80 Gewichtsprozent und als Restmenge 40 bis 20 Gewichtsprozent verwendet werden.

6. N-Vinylamid-Polymer, erhalten nach dem Verfahren gemäß Anspruch 1.

**Claims**

1. Process for the manufacture of N-vinylamide polymers by polimerizing a tertiary N-vinyl carboxylic acid amide of the formula (I)

$$CH_2 = CH - \underset{\displaystyle R^2}{\overset{|}{N}} - CO - R^1 \qquad (I)$$

wherein $R^1$ is a hydrogen atom or a hydrocarbon radical having from 1 to 20 carbon atoms and $R^2$ means an alkyl radical having from 1 to 20 carbon atoms, which may be substituted by a completely alkylated amino group, optionally in combination with a copolymerizable olefinically unsaturated compound, in the presence of an inert aliphatic hydrocarbon having from 3 to 20 carbon atoms at a temperature of from zero to 150 °C and in the preesence of azo compounds and/or peroxy compounds as radical-forming initiators, characterized by carrying out the polymerization in the presence of (a) from 0.1 to 4 percent by weight (referred to the total amount of monomers) of an initiator which, under normal conditions, is soluble in the monomeric N-vinyl carboxylic acid amide and insoluble in the hydrocarbon used, and (b) from 0.02 to 2 percent by weight (referred to the total amount of monomers) of an initiator which, under normal conditions, is soluble in the hydrocarbon used, the ratio by weight of the hydrocarbon to the monomers being from 20 : 1 to 0.5 : 1.

2. Process according to claim 1, characterized by using as initiator (b) an ester of a peroxy acid.

3. Process according to claim 2, characterized by using as ester of a peroxy acide an ester of a branched alkanol having from 3 to 8 carbon atoms with percarbonic acid or a monobasic aliphatic percarboxylic acid having from 4 to 12 atoms.

4. Process according to claim 1, characterized by first introducing the main portion of the hydrocarbon into the reaction vessel and heating it to the polymerization temperature, then adding portionwise the N-vinyl carboxylic acid amide, optionally in combination with the comonomer, together with the remaining portion of the hydrocarbon and the initiator insoluble in the hydrocarbon as well as optionally together with a regulator while constantly moving the introduced hydrocarbon, and finally adding the initiator soluble in the hydrocarbon.

5. Process according to claim 4, characterized by using from 60 to 80 percent by weight as main portion of the hydrocarbon and from 40 to 20 percent by weight as remaining portion.

6. N-vinylamid polymer, obtained by the process according to claim 1.

**Revendications**

1. Procédé de préparation de polymères de N-vinylamides par polymérisation d'un N-vinyl-carboxamide tertiaire répondant à la formule

$$CH_2 = CH - \underset{\displaystyle R^2}{\overset{|}{N}} - CO - R^1 \qquad (I)$$

dans laquelle $R^1$ représente un atome d'hydrogène ou un radical hydrocarboné contenant de 1 à 20 atomes de carbone et $R^2$ représente un radical alkyle contenant de 1 à 20 atomes de carbone et portant éventuellement comme substituant un groupe amino totalement alkylé, éventuellement avec un composé éthylénique copolymérisable, en présence d'un hydrocarbure aliphatique inerte contenant de 3 à 20 atomes de carbone, à une température de 0 à 150 °C et en présence de composés azoïques et/ou de composés peroxydiques jouant le rôle d'amorceurs radicalaires, procédé caractérisé en ce qu'on effectue la polymérisation en présence (a) de 0,1 à 4 % en poids (par rapport à la quantité totale du ou des monomères) d'un amorceur qui, dans les conditions normales est soluble dans le N-vinyl-carboxamide monomère et insoluble dans l'hydrocarbure utilisé, et (b) de 0,02 à 2 % en poids (par rapport à la quantité totale du ou des monomères) d'un amorceur qui, dans les conditions normales, est soluble dans l'hydrocarbure utilisé, le rapport pondéral de l'hydrocarbure au monomère étant compris entre 20 : 1 et 0,5 : 1.

2. Procédé selon la revendication 1 caractérisé en ce qu'on utilise comme amorceur b) un ester d'un peroxy-acide.

3. Procédé selon la revendication 2 caractérisé en ce qu'on utilise, comme ester d'un peroxy-acide, un ester dérivant d'un alcanol ramifié et contenant de 3 à 8 atomes de carbone et de l'acide percarbonique ou d'un peracide carboxylique aliphatique qui contient un seul groupe acide et qui a de 4 à 12 atomes de carbone.

4. Procédé selon la revendication 1 caractérisé en ce qu'on place d'abord la majeure partie de l'hydrocarbure dans le récipient réactionnel et on porte à la température de polymérisation, puis on introduit progressivement, tout en remuant constamment l'hydrocarbure préalablement mis en place, le N-vinyl-carboxamide, éventuellement avec le comonomère, en même temps que le restant de l'hydrocarbure et l'amorceur insoluble dans celui-ci ainsi qu'éventuellement un régulateur, après quoi on ajoute l'amorceur soluble dans l'hydrocarbure.

5. Procédé selon la revendication 4 caractérisé en ce qu'on utilise, en tant que « majeure partie » de l'hydrocarbure, de 60 à 80 % en poids de celui-ci et, en tant que « restant », de 40 à 20 % en poids.

6. Polymère d'un N-vinyl-amide qui a été obtenu par le procédé de la revendication 1.